# EUROPEAN PATENT SPECIFICATION

(11) **EP 4 578 234 B1**
(45) Date of publication and mention of the grant of the patent: **11.02.2026**
(21) Application number: 23761529.9
(22) Date of filing: 25.08.2023
(51) Int. Cl.: H04W 60/06

(54) **DEREGISTRATION PROCEDURE OF PROTOCOL DATA UNIT SESSION**
ABMELDEVERFAHREN EINER PROTOKOLLDATENEINHEITSSITZUNG
PROCÉDURE DE DÉSENREGISTREMENT DE SESSION D'UNITÉ DE DONNÉES DE PROTOCOLE

(30) Priority: 25.08.2022 US 202263373511 P
(43) Date of publication of application: 02.07.2025
(73) Proprietor: Telefonaktiebolaget LM Ericsson (publ), 164 83 Stockholm (SE)
(72) Inventor: HE, Yingjiao, Shanghai 200335 (CN); DE GREGORIO RODRIGUEZ, Jesús Ángel, 28660 Boadilla del Monte Madrid (ES); MERINO VAZQUEZ, Emiliano, 28916 Madrid (ES); CASTELLANOS ZAMORA, David, 28026 Madrid (ES); CHEN, Qian, 431 49 Mölndal (SE); WON, Jongkyu, Seoul 06704 (KR); ZHANG, Wen, Shanghai 200335 (CN)
(74) Representative: Ericsson
(86) International application number: PCT/EP2023/073396
(87) International publication number: WO 2024/042224

(56) References cited:
- WO-A1-2021/096193
- US-A1- 2021 051 533
- US-A1- 2022 408 396
- ZTE ET AL: "P-CSCF Restoration Solutions in 5G Network", vol. CT WG4, no. KunMing, P.R. China; 20180416 - 20180420, 19 April 2018 (2018-04-19), XP051435308, Retrieved from the Internet <URL:http://www.3gpp.org/ftp/tsg%5Fct/WG4%5Fprotocollars%5Fex%2DCN4/TSGCT4%5F84%5FKunMing/Docs/> [retrieved on 20180419]
- JESUS DE GREGORIO ET AL: "Improvement to UDM-triggered PDU Session deregistration procedure", vol. 3GPP CT 4, no. Toulouse, FR; 20221114 - 20221118, 4 November 2022 (2022-11-04), XP052214911, Retrieved from the Internet <URL:https://www.3gpp.org/ftp/tsg_ct/WG4_protocollars_ex-CN4/TSGCT4_113_Toulouse/Docs/C4-225310.zip C4-225310-UDM-Triggered-PDU-Session-Deregistration-29503.docx> [retrieved on 20221104]
- "3rd Generation Partnership Project; Technical Specification Group Core Network and Terminals; 5G System; Unified Data Management Services; Stage 3 (Release 17)", vol. CT WG4, no. V17.7.0, 21 June 2022 (2022-06-21), pages 1 - 514, XP052183076, Retrieved from the Internet <URL:https://ftp.3gpp.org/Specs/archive/29_series/29.503/29503-h70.zip 29503-h70.docx> [retrieved on 20220621]

## Description

### TECHNICAL FIELD

Disclosed are embodiments related to methods and apparatus for performing deregistration procedure of Protocol Data Unit (PDU) session.

### BACKGROUND

3GPP Technical Specification (TS) 29.503 describes Unified Data Management (UDM) initiated Network Function (NF) deregistration. The relevant portion of the TS is reproduced below.

| |
|---|
| **TS 29.503: 5.3.2.3.2 UDM initiated NF Deregistration** |
| Figure 5.3.2.3.2-1 shows a scenario where the UDM notifies the registered NF about its deregistration (see also 3GPP TS 23.502 [3] figure 4.2.2.2.2-1 step 14 and 3GPP TS 23.502 [3] figure 4.26.4.1.1-1 step 14). The request contains the deregCallbackUri URI for deregistration notification as received by the UDM during registration, and Deregistration Data. |
| The UDM initiates the deregistration procedure when the UE is registered to the AMF which does not support CAG feature and the CAG subscription of the UE changes and it is allowed to access the 5GS via CAG cell(s) only. |
| The UDM also initiates deregistration notification when UE moves to different AMF within same AMF-Set. |
| Deregistration notification shall not be sent if the nflnstanceld of the AMF initiating registration is same as the old AMF already registered in UDM (e.g. when multiple PLMNs are hosted on same AMF and UE moves across PLMNs). |
| The UDM also initiates the deregistration procedures towards the SMF of the old PDU session when a new PDU session has been established with the same PDU session ID from a different SMF, during SM Context Transfer procedure (see clause 4.26.5.3 of 3GPP TS 23.502 [3]) or when duplicated PDU sessions existing in the network (e.g. the AMF failed to release the old PDU session before creation of the new PDU session with the same PDU session ID). |

### Figure 7

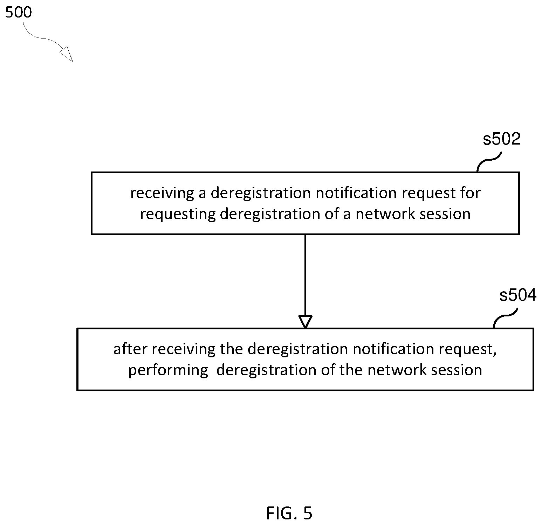

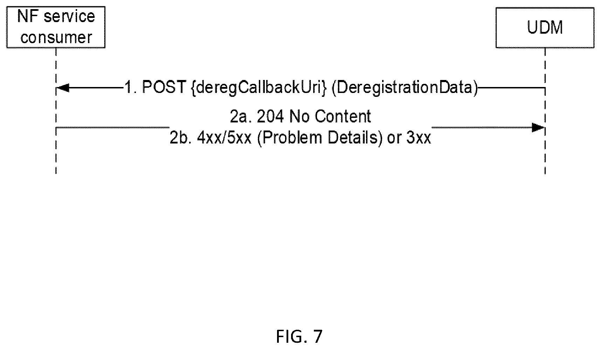

**FIG. 7** corresponds to Figure 5.3.2.3.2-1 mentioned in the above cited section of TS. As shown in FIG. 7, during UDM initiated NF deregistration process, UDM transmits towards NF service consumer Deregistration Data. Information relative to the Deregistration Data provided in 3GPP TS 29.503 is reproduced below.

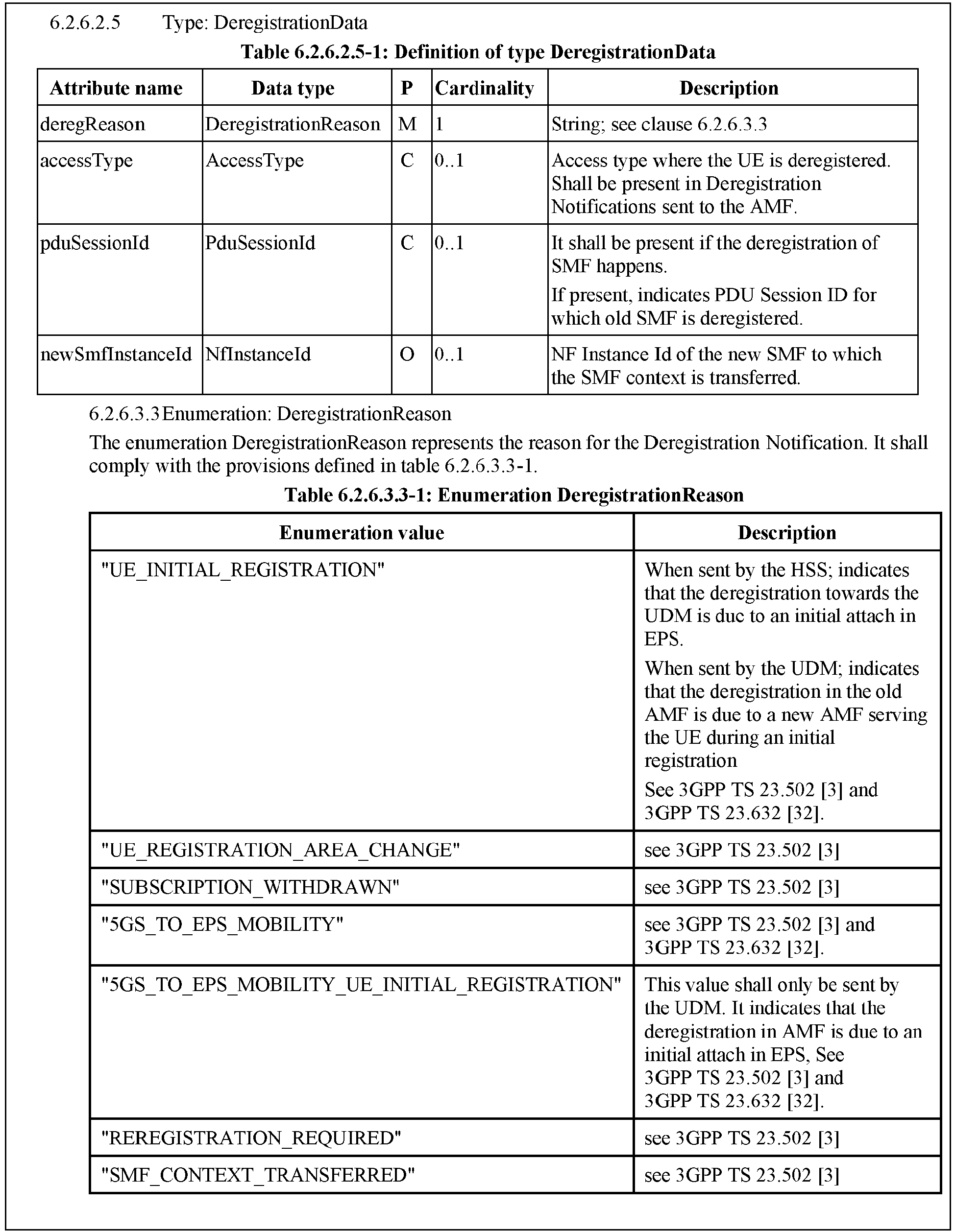

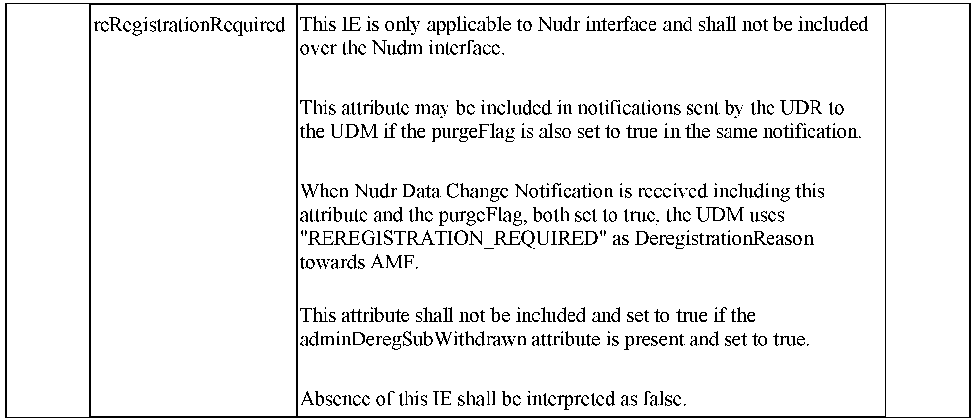

3GPP TS 29.503 also describes resource(s) used to represent individual PDU session SMF registrations. The relevant portion of the cited section of the 3GPP is reproduced below.

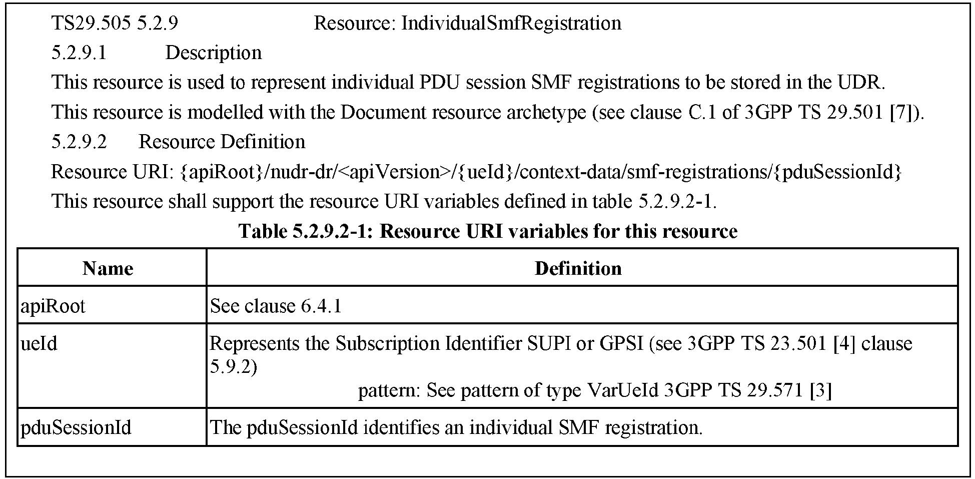

Additionally, 3GPP TS 29.503 describes resource standard methods. The relevant portion of the cited section of the 3GPP is reproduced below.

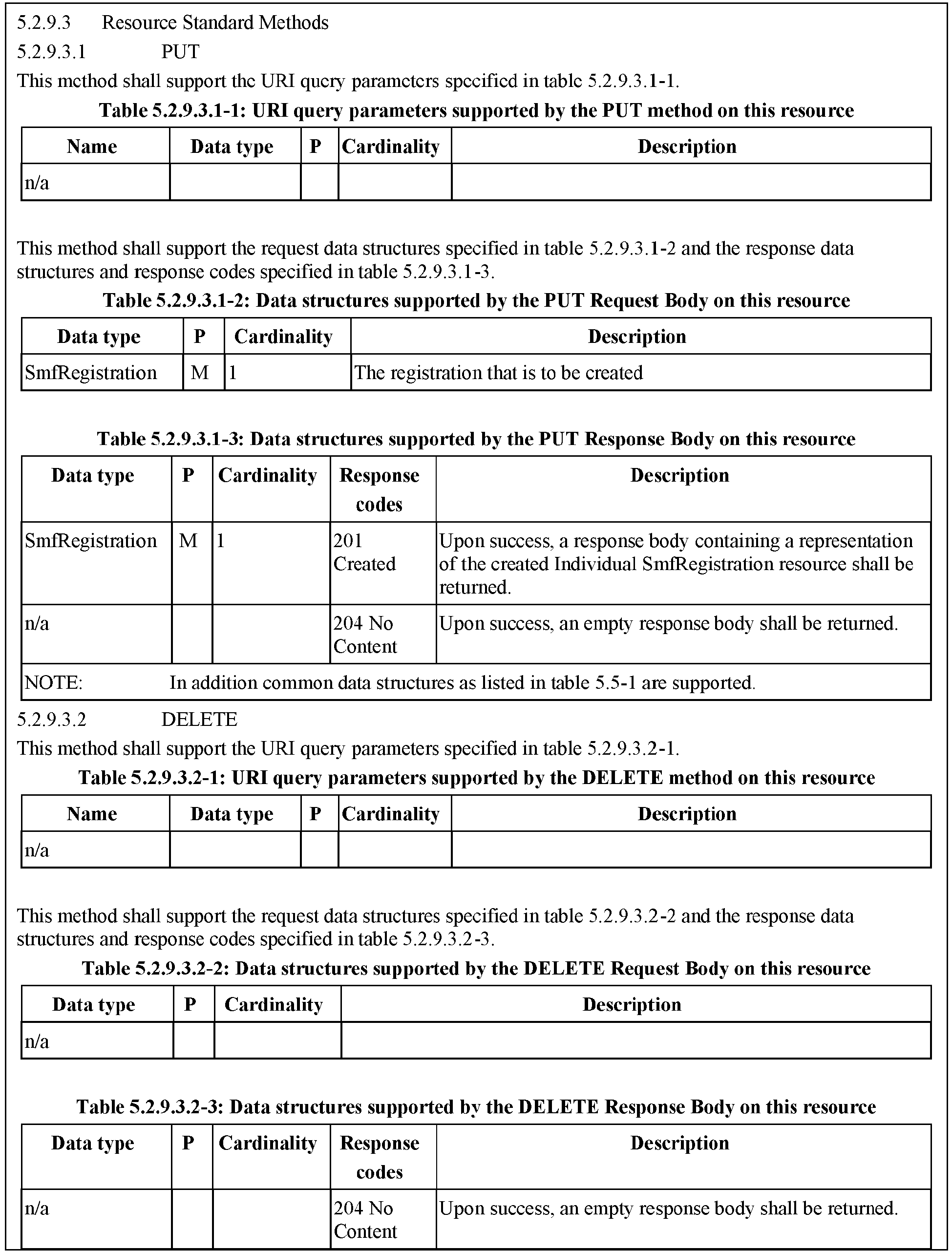

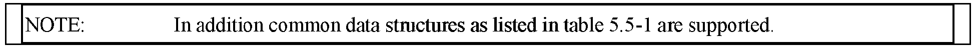

### SUMMARY

Certain challenges presently exist. For example, with wide deployment of 5G commercial network, deregistration of a PDU session for a wireless device due to administrative reasons (e.g., due to that the subscription of the wireless device has changed) and reactivation of the deregistered PDU session cannot be initiated by a Unified Data Management (UDM) or a Unified Data Repository (UDR). More specifically, in the existing art, UDR or UDM is not configured to indicate to a Session Management Function (SMF) that reactivation of a PDU session is needed when the UDR or the UDM instructs the SMF to perform deregistration of a PDU session. There is no procedure for readily reactivating the PDU session once the administrative reasons (e.g. a subscription change) causing the deregistration of the PDU session has been handled with respect to the wireless device, e.g. notified or indicated to the wireless device and/or other functions or nodes in the network.

For example, there may be a scenario where an end user of a wireless device (e.g., a user equipment (UE)) contacts a wireless network operator providing a subscription for one or more services with respect to the wireless device and requests to change the subscription for the wireless device (e.g., change the payment plan) for the one or more services. In such scenario, the wireless network operator may have their own UDM/UDR interworking application for handling the request for changing the payment plan and may use UDM/UDR solution to register a PDU session. But there is no existing method to request the wireless device to immediately apply for a new payment plan (such that the deregistered PDU session is reactivated).

Accordingly, in one aspect of the embodiments of this disclosure, there is provided a method performed by a unified data management, UDM. The method comprises obtaining a command for triggering deregistration of a network session associated with a session management function, SMF, and a user equipment, UE, wherein the command is transmitted (s220) by a unified data repository, UDR, and the command includes a uniform resource identifier, URI, pointing to the network session and indicates that reactivation of the network session is required. The method further comprises, after obtaining the command, transmitting towards the SMF a deregistration notification request for triggering the SMF to perform the deregistration of the network session. The deregistration notification request indicates that the network session being deregistered is requested to be reactivated.

In another aspect, there is provided a method performed by a unified data repository, UDR. The method comprises obtaining a first command for changing a value of a flag included in a resource, wherein the resource is related to registration of a session management function, SMF, for a network session. The method further comprises, based on the first command, changing the value of the flag. The method further comprises, as a result of changing the value of the flag, transmitting towards a unified data management, UDM, a message including a second command for triggering deregistration of the network session, wherein each of the first and second commands indicates whether reactivation of the network session is required.

In another aspect, there is provided computer program (600) comprising instructions (644) which when executed by a processing unit (602) of a unified data management, UDM (104), cause the UDM (104) to perform the method of any one of claim 1-9.

In another aspect, there is provided a unified data management, UDM. The UDM is configured to obtain a command for triggering deregistration of a network session associated with a session management function, SMF, and a user equipment, UE, wherein the command is transmitted (s220) by a unified data repository, UDR, and the command includes a uniform resource identifier, URI, pointing to the network session and indicates that reactivation of the network session is required. The UDM is further configured to, after obtaining the command, transmit towards the SMF a deregistration notification request for triggering the SMF to perform the deregistration of the network session, wherein the deregistration notification request indicates that the network session being deregistered is requested to be reactivated.

In another aspect, there is provided a unified data repository, UDR. The UDR is configured to obtain a first command for changing a value of a flag included in a resource, wherein the resource is related to registration of a session management function, SMF, for a network session. The UDR is further configured to, based on the first command, change the value of the flag; and as a result of changing the value of the flag, transmit towards a unified data management, UDM, a message including a second command for triggering deregistration of the network session, wherein each of the first and second commands indicates whether reactivation of the network session is required.

In another aspect, there is provided an apparatus. The apparatus comprises a processing circuitry and a memory, said memory containing instructions executable by said processing circuitry, whereby the apparatus is operative to perform the method of any one of embodiments described above.

The embodiments of this disclosure allow UDM and/or UDR to trigger deregistration of a PDU session from the UDM and the UDR with reactivation of the PDU session required.

The accompanying drawings, which are incorporated herein and form part of the specification, illustrate various embodiments.

### BRIEF DESCRIPTION OF THE DRAWINGS

The accompanying drawings, which are incorporated herein and form part of the specification, illustrate various embodiments.
- Figure 1: shows a system according to some embodiments.
- Figure 2: shows a process according to some embodiments.
- Figure 3: shows a process according to some embodiments.
- Figure 4: shows a process according to some embodiments.
- Figure 5: shows a process according to some embodiments.
- Figure 6: shows an apparatus according to some embodiments.
- Figure 7: shows a UDM initiated NF deregistration process.

### DETAILED DESCRIPTION

### Figure 1

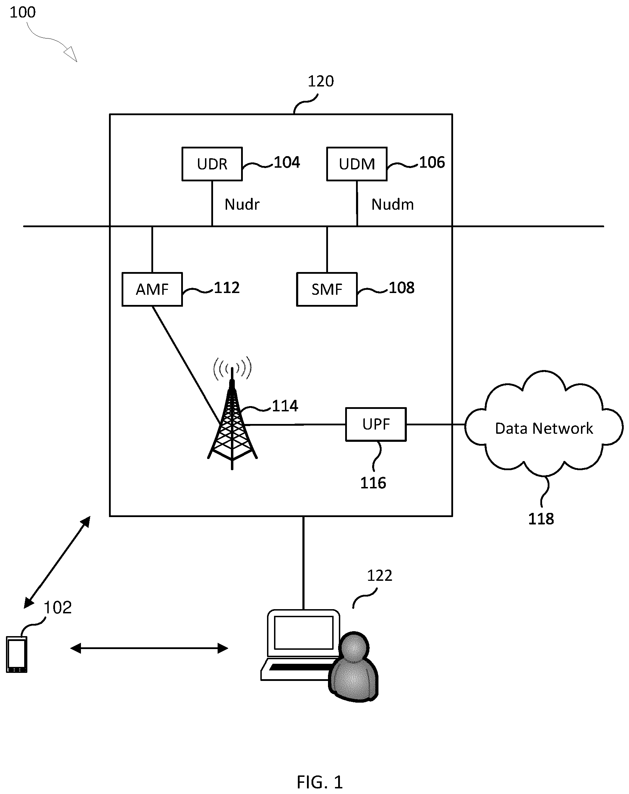

**FIG.** 1 shows an example system 100 according to some embodiments. System 100 comprises a user equipment (UE) 102 (e.g., a mobile phone, a tablet, a laptop, a drone, a vehicle, etc.), a data network 118, a wireless network system 120, and a customer center 122. Customer center 122 may be a customer center of a wireless network operator operating wireless network system 120.

Wireless network system 120 may comprise an UDR 104, an UDM 106, a Session Management Function (SMF) 108, an Access and Management Function (AMF) 112, a base station (e.g., gNB) 114, and a User Plane Function (UPF) 116. Note that FIG. 1 does not show all entities included in wireless network system 120 but only shows a portion of the system for simple explanation. Also even though FIG. 1 shows that customer center 122 is separate from wireless network system 120, in some embodiments, customer center 122 is included in wireless network system 120. UE 102 is connected to data network 118 (e.g., internet) via a wireless network provided by base station 114, and base station 114 is connected to data network 118 via UPF 116.

As discussed above, in some scenarios, an established PDU session needs to be released/deregistered but also needs to be reactivated (e.g., right away) after the release/deregistration.

Before further discussing the release/deregistration process, it is noted that, in this disclosure, the expression -- releasing a PDU session -- and the expression -- deregistering a PDU session -- are used interchangeably. Thus, in this disclosure, releasing a PDU session and deregistering a PDU session mean the same thing. Releasing/deregistering a PDU session may comprise deregistering one or more entities (e.g., SMF 108).

Referring back to the aforementioned scenarios, in one example, a user of UE 102 (herein after, just "UE 102") may contact customer center 122 and request for changing its network plan (a.k.a., "payment plan"). More specifically, in case UE 102's current payment plan allows UE 102 to stream up to 5GB of video per month, UE 102 may want to change its payment plan such that UE 102 can stream up to 10 GB of video per month. In such case, wireless network system 120 needs to deregister an established PDU session for UE 102 (e.g., to stop its current payment plan) but also needs to reactivate the PDU session after the deregistration (e.g., to start the new payment plan).

### Figure 2

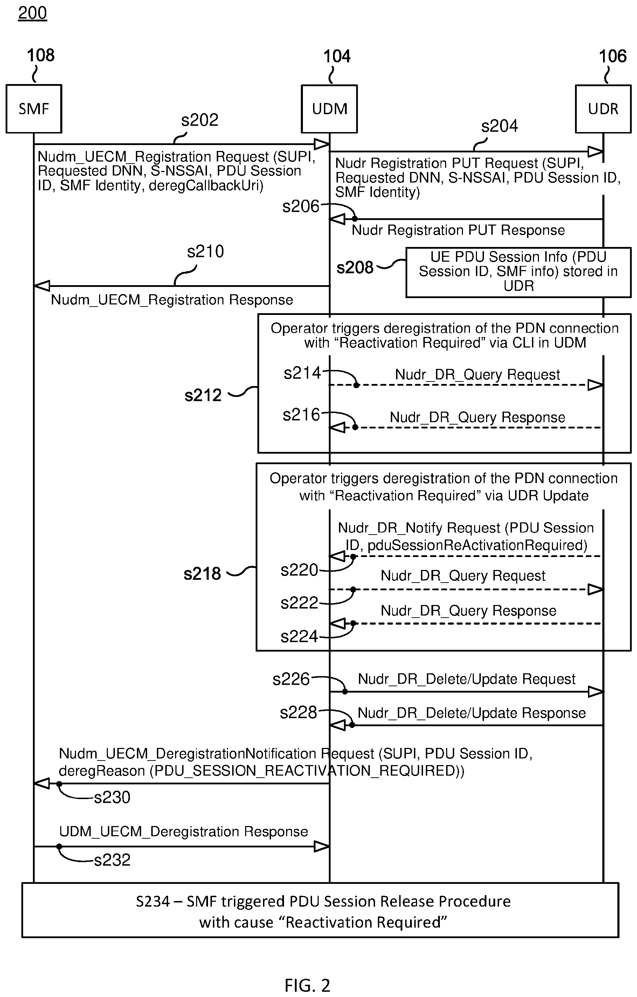

In order to satisfy the above needs, in some embodiments, wireless network system 120 is configured to perform a process 200 shown in **FIG. 2****.** As shown in FIG. 2, process 200 includes steps for deregistering an established PDU session and for reactivating the deregistered PDU session. Detailed information about such steps is provided below.

Process 200 may begin with step s202. Step s202 comprises, during a PDU session establishment process, SMF 108 transmitting to UDM 104 a registration request for registering SMF 108 in UDM 104 for UE 102 and/or a PDU session associated with UE 102. In some embodiments, the registration request is the Nudm_UECM_Registration Request defined in 3GPP Technical Specification (TS) 23.502.

The registration request may comprise one or more of: a 5G globally unique subscription permanent identifier (SUPI) allocated to UE 102, a requested data network name (DNN), a single network slice selection assistance information (S-NSSAI) identifying a network slice, a PDU session ID identifying a PDU session, an SMF ID identifying SMF 108. Note that, in the embodiments of this disclosure, a generic public subscription identifier (GPSI) may be used instead of the SUPI.

Additionally, the registration request may comprise a resource identifier for receiving one or more notifications on deregistration of a network function. The resource identifier may be an Uniform Resource Identifier (URI) provided by AMF 112, and may be used for receiving (implicitly subscribed) notifications on deregistration of a network session. In one example, the resource identifier may be a deregCallbackUri defined in 3GPP TS 29.503.

After receiving the registration request, in step s204, UDM 104 may transmit to UDR 106 a registration PUT request. In some embodiments, the registration PUT request is Nudr_Registration PUT Request defined in 3GPP TS 29.505.

Like the registration request SMF 108 transmitted to UDM 104 in step s202, the registration PUT request may comprise one or more of: the SUPI, the DNN, the S-NSSAI, the PDU session ID, and the SMF ID. However, unlike the registration request transmitted in step s202, the registration PUT request does not include the resource identifier.

After receiving the registration PUT request, in step s206, UDR 106 may transmit to UDM 104 a registration PUT response responding to the registration PUT request. In some embodiments, the registration PUT response is Nudr_Registration PUT Response defined in 3GPP TS29.505.

In case the registration of SMF 108 is successful, in step s208, PDU session information may be stored in UDR 106. More specifically, an SMF ID identifying SMF 108 (same as the SMF ID included in the registration request and the registration PUT request) and a PDU session ID identifying a PDU session associated with SMF 108 (same as the PDU session ID included in the registration request and the registration PUT request) may be stored in UDR 106.

Upon receiving the registration PUT response, in step s210, UDM 104 may transmit to SMF 108 a registration response. In some embodiments, the registration response is the Nudm_UECM_Registration Response defined in 3GPP Technical Specification (TS) 23.502.

After establishing a PDU session (associated with SMF 108 and UE 102), as discussed above, there may be a scenario where the PDU session needs to be deregistered but needs to be reactivated after the deregistration. For example, UE 102 may contact customer center 122 and request for changing its payment plan. In such scenario, the PDU session needs to be deregistered temporarily and then to be reactivated such that UE 102's payment plan can be updated. Thus, the network operator of wireless network system 120 may need to trigger deregistration of the PDU session and reactivation of the deregistered PDU session.

Accordingly, process 200 may proceed to either step s212 or step s218. In both steps s212 and s218, the network operator triggers deregistration of the PDU session with an indication that once the PDU session is deregistered, the deregistered PDU session needs to be reactivated (herein after, "reactivation indication").

One way of the network operator triggering the deregistration of the PDU session is performing step s212. In step s212, the network operator may provide Operation and Management (O&N) Command Line Interface (CLI) command(s) (herein after, "CLI command") to UDM 104. For example, UDM 104 may be provided with a computer terminal capable of receiving CLI command, and the network operator may enter into the computer terminal the CLI command for triggering deregistration of the PDU session with the reactivation indication.

The CLI command may include information about a SUPI (e.g., identifying UE 102), a PDU session ID (e.g., identifying the PDU session that needs to be deregistered), and the reactivation indication ("pduSessionReActivationRequired" indication).

The CLI command may also include an SMF ID (e.g., identifying SMF 108) identifying an SMF that needs to be deregistered. In case, the CLI command does not include the SMF ID, in optional step s214, UDM 104 may transmit to UDR 106 a request (e.g., "Nudr_DR_Query Request") for the SMF ID, and in optional step s216, UDR 106 may transmit to UDM 104 a response including the requested SMF ID. In some embodiments, the request in step s214 and/or the response in step s216 may include the PDU session ID and/or the SUPI (or GPSI).

Instead of performing step s212, step s218 may be performed to trigger the deregistration process.

In some embodiments, UDR 106 is configured to store PDU session information identifying the PDU session to be released by SMF 108. The PDU session information may also include a resource related to SMF registration (e.g., "smfRegistration resource"), and the SMF registration resource may include a flag (e.g., "pduSessionReActivationRequired" flag) associated with the PDU session to be released. The flag may indicate whether a session reactivation is required for the PDU session. Table below shows information that may be included in the smfRegistration resource.

**Table: Definition of type SmfRegistration**

| **Attribute name** | **Data type** | **P** | **Cardinality** | **Description** |
|---|---|---|---|---|
| smfInstanceId | NfInstanceId | M | 1 | NF Instance Id of the SMF |
| .... | .... | ... | ... | ... |
| pduSessionId | PduSessionId | M | 1 | PDU Session ID |
| singleNssai | Snssai | M | 1 | A single Network Slice Selection Assistance Information |
| .... | ... | ... | ... | ... |
| **pduSessionReActivatio nRequired** | **boolean** | **C** | **0..1** | **This IE is only applicable to Nudr interface and shall not be included over the Nudm interface.** |
| | | | | |
| | | | | **This attribute may be included in notifications sent by the UDR to the UDM.** |
| | | | | |
| | | | | **When Nudr Data Change Notification is received including this attribute set to true, the UDM uses "PDU_SESSION_REACTIVATION_REQUES TED" as DeregistrationReason towards SMF.** |
| | | | | |
| | | | | **Absence of this IE shall be interpreted as false.** |

In step s218, the deregistration process may be triggered by changing the value of this flag in the SMF registration resource.

More specifically, the network operator may change (or set) the value of the flag (i.e., a change in the "pduSessionReActivationRequired" flag) such that the flag value indicates that the session reactivation is required. Such change or the set of the flag value may trigger, in optional step s220, UDR 106 to transmit to UDM 104 a notification message (e.g., "Nudr_DR_Notify Request") indicating the change of the value of the flag. The notification message may comprise a Uniform Resource Identifier (URI) pointing to the PDU session to be released and may indicate that reactivation of the network session is required and/or requested. More specifically, the notification message may comprise a flag indicating the reason for transmitting the notification message, and the value of the flag may indicate that reactivation of the network session is required and/or requested. In response to receiving the notification, UDM 104 may transmit to UDR 106 an optional acknowledgement message acknowledging the receipt of the notification message.

Additionally, upon receiving the notification, in optional step s222, UDM 104 may use the received URI pointing to the PDU session to retrieve (e.g., from UDR 106) all the information related to the PDU session as registered by SMF 108 initially. The information related to the PDU session may include the SMF ID identifying SMF 108. More specifically, UDM 104 may transmit to UDR 106 a query request (e.g., "Nudr_DR_Query Request") for fetching the PDU session ID identifying the PDU session to be released and the SMF ID identifying the SMF that needs to be deregistered. Upon receiving the query request, in optional step s224, UDR 106 may transmit to UDM 104 the requested information. In some embodiments, the request in step s222 and/or the response in step s224 may include the PDU session ID and/or the SUPI (or GPSI).

After step s212 or step s218 is performed, process 200 may proceed to steps s226 and s228. In s226, UDM 104 transmits to UDR 106 a request to delete/update the PDU session information (i.e., the information about the PDU session to be released, which includes the SMF registration resource). The request may include a PDU session ID identifying the PDU session to be released. In some embodiments, the request is the Nudr_DR_Delete Request or the Nudr_DR_Update Request defined in 3GPP Technical Specification (TS) 29.504. But UDM 104 may keep locally the information about the SUPI, the PDU session ID, and the SMF ID in order for UDM 104 to send to SMF 108. In some embodiments, the request in step s226 and/or the response in step s228 may include the PDU session ID and/or the SUPI (or GPSI).

Upon receiving the request, in step s228, UDR 106 may delete/update the PDU session information and transmit to UDM 104 a response indicating the completion of the deletion/update.

After step s228, process 200 may proceed to step s230. In step s230, UDM 104 may transmit to SMF 108 a deregistration message informing SMF 108 to perform the deregistration of the PDU session for UE 102. In one example, the degistration message is the Nudm_UECM_DeregistrationNotification Request defined in 3GPP Technical Specification (TS) 23.502.

The deregistration message may include the SUPI identifying UE 102, the PDU session ID identifying the PDU session to be released/deregistered, and a deregistration reason field. The table provided below shows example information that may be included in the deregistration reason field.

**Table : Enumeration DeregistrationReason**

| **Enumeration value** | **Description** |
|---|---|
| "VE_INITIAL_REGISTRATION" | When sent by the HSS; indicates that the deregistration towards the UDM is due to an initial attach in EPS. |
| | When sent by the UDM; indicates that the deregistration in the old AMF is due to a new AMF serving the UE during an initial registration |
| | See 3GPP TS 23.502 [3] and 3GPP TS 23.632 [32]. |
| "UE_REGISTRATION_AREA_CHANGE" | see 3GPP TS 23.502 [3] |
| "SUBSCRIPTION_WITHDRAWN" | see 3GPP TS 23.502 [3] |
| "5GS_TO_EPS_MOBILITY" | see 3GPP TS 23.502 [3] and 3GPP TS 23.632 [32]. |
| "5GS_TO_EPS_MOBILITY_UE_INITIAL_R EGISTRATION" | This value shall only be sent by the UDM. It indicates that the deregistration in AMF is due to an initial attach in EPS, See 3GPP TS 23.502 [3] and 3GPP TS 23.632 [32]. |
| "REREGISTRATION_REQUIRED" | see 3GPP TS 23.502 [3] |
| "SMF_CONTEXT_TRANSFERRED" | see 3GPP TS 23.502 [3] |
| **"PDU_SESSION_REACTIVATION_REQ UIRED"** | **Indicates that the PDU session being released is requested to be re-activated** |

As shown above, the deregistration reason field is capable of indicating whether the PDU session being released is requested to be reactivated. More specifically, the deregistration reason field can be set to have a value corresponding to "PDU_Session_Reactivation_Required."

Upon receiving the deregistration message, in step s232, SMF 108 may transmit to UDM 104 a deregistration response. The deregistration response may indicate the receipt of the deregistration request. In some embodiments, the registration response is the Nudm_UECM_DeregistrationNotification Response defined in 3GPP Technical Specification (TS) 23.502.

Also, upon receiving the deregistration message, in step s232, SMF 108 may trigger a PDU session release procedure with the reactivation indication. In the PDU session release procedure with the reactivation indication, SMF 108 may indicate to UE 102 that the PDU session that is being released needs to be reactivated, and SMF 108's such indication may trigger UE 102 to send a re-attach message after the PDU session is released.

### Figure 3

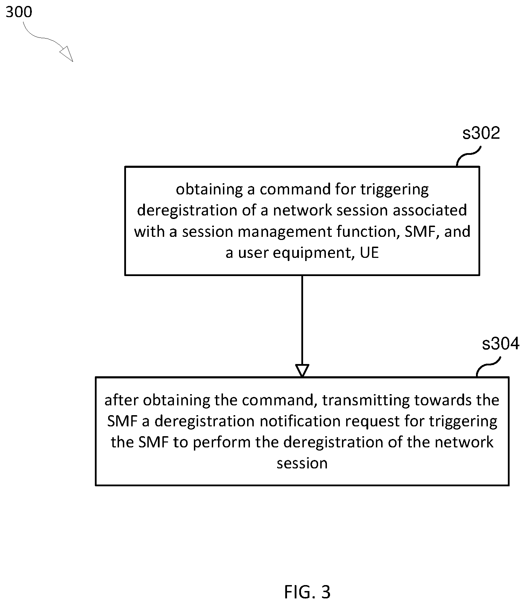

**FIG. 3** shows a process 300 performed by a unified data management, UDM. Process 300 may begin with step s302. Step s302 comprises obtaining a command for triggering deregistration of a network session associated with a session management function, SMF, and a user equipment, UE, wherein the command indicates that reactivation of the network session is required. Step s304 comprises, after obtaining the command, transmitting towards the SMF a deregistration notification request for triggering the SMF to perform the deregistration of the network session. The deregistration notification request indicates that the network session being deregistered is requested to be reactivated.

In some embodiments, the command is generated at the UDM or at a unified data repository, UDR.

In some embodiments, the command is generated at the UDM, and the command comprises (i) a globally unique subscription permanent identifier, SUPI, allocated to the UE and/or a generic public subscription identifier (GPSI), and (ii) a network session identifier identifying the network session.

In some embodiments, the command also comprises a SMF identifier identifying the SMF or the method comprises retrieving the SMF identifier from the UDR.

In some embodiments, the process comprises receiving a message including the command transmitted by the UDR, and the command includes an uniform resource identifier, URI, pointing to the network session.

In some embodiments, the message is a Nudr_DR_Notify Request.

In some embodiments, the transmission of the message by the UDR was triggered by changing a value of a flag included in a resource related to registration of the SMF for the network session, and the value of the flag indicates whether reactivation of the network session is required.

In some embodiments, the process comprises as a result of receiving the message, transmitting towards the UDR a query request for requesting a network session ID identifying the network session and an SMF ID identifying the SMF; and receiving the network session ID and the SMF ID.

In some embodiments, the process comprises storing a SUPI allocated to the UE, a network session identifier identifying the network session, and a SMF identifier identifying the SMF; and triggering the UDM to release one or more resources related to the network session.

In some embodiments, the deregistration notification request indicates a reason for deregistering the network session.

In some embodiments, the deregistration notification request comprises a SUPI allocated to the UE, a network session identifier identifying the network session, and a SMF identifier identifying the SMF.

In some embodiments, the deregistration notification request is a Nudm_UECM_DeregistrationNotification Request.

### Figure 4

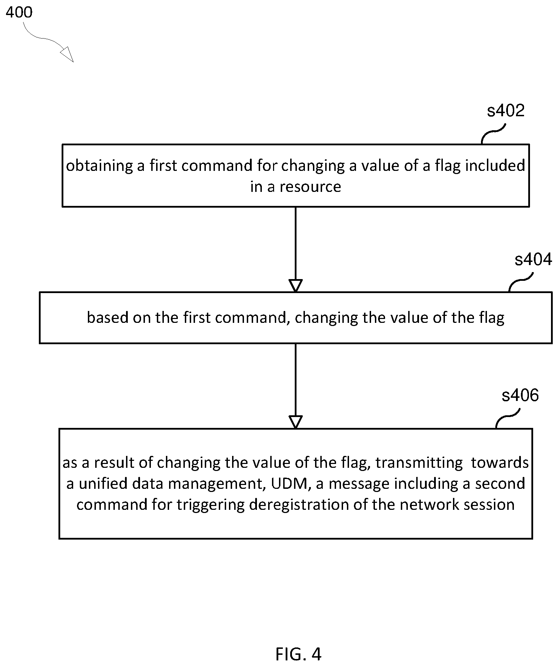

**FIG. 4** shows a process 400 performed by a unified data repository, UDR. Process 400 may begin with step s402. Step s402 comprises obtaining a first command for changing a value of a flag included in a resource, wherein the resource is related to registration of a session management function, SMF, for a network session. Step s404 comprises based on the first command, changing the value of the flag. Step s406 comprises, as a result of changing the value of the flag, transmitting towards a unified data management, UDM, a message including a second command for triggering deregistration of the network session, wherein each of the first and second commands indicates whether reactivation of the network session is required.

In some embodiments, the resource comprises a SUPI, a SMF identifier, ID, identifying the SMF, a network session ID identifying the network session, a single network slice selection assistance information, SNSSAI, and a bit indicating whether reactivation of the network session is required.

In some embodiments, the second command comprises a resource ID pointing to the network session, and the process comprises: receiving a query request for requesting an SMF ID identifying the SMF and a network session ID identifying the network session and; and transmitting towards the UDM the SMF ID and the network session ID.

### Figure 5

**FIG. 5** shows a process 500 performed by a session management function, SMF. Process 500 may begin with step s502. Step s502 comprises receiving a deregistration notification request for requesting deregistration of a network session, wherein the deregistration notification request was transmitted by a unified data management, UDM. Step s504 comprises, after receiving the deregistration notification request, performing deregistration of the network session, wherein the deregistration notification request indicates that the network session being deregistered is requested to be reactivated.

In some embodiments, the deregistration notification request comprises a field for identifying a reason for deregistering the network session, and the indication that the network session being deregistered is requested to be reactivated is included in the field.

In some embodiments, the deregistration notification request comprises a SUPI allocated to the UE, a network session identifier identifying the network session, and a SMF identifier identifying the SMF.

In some embodiments, the deregistration notification request is a Nudm_UECM_Deregistration request.

### Figure 6

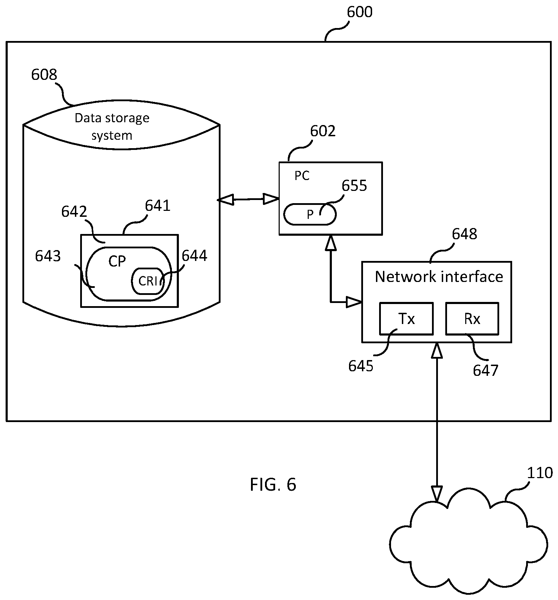

**FIG. 6** is a block diagram of an apparatus 600, according to some embodiments, for implementing any one or more of SMF 108, UDM 104, or UDR 106. As shown in FIG. 6, apparatus 600 may comprise: processing circuitry (PC) 602, which may include one or more processors (P) 655 (e.g., a general purpose microprocessor and/or one or more other processors, such as an application specific integrated circuit (ASIC), field-programmable gate arrays (FPGAs), and the like), which processors may be co-located in a single housing or in a single data center or may be geographically distributed (i.e., apparatus 600 may be a distributed computing apparatus); a network interface 648 comprising a transmitter (Tx) 645 and a receiver (Rx) 647 for enabling apparatus 600 to transmit data to and receive data from other nodes connected to a network 110 (e.g., an Internet Protocol (IP) network) to which network interface 648 is connected (directly or indirectly) (e.g., network interface 648 may be wirelessly connected to the network 110, in which case network interface 648 is connected to an antenna arrangement); and a local storage unit (a.k.a., "data storage system") 608, which may include one or more non-volatile storage devices and/or one or more volatile storage devices. In embodiments where PC 602 includes a programmable processor, a computer program product (CPP) 641 may be provided. CPP 641 includes a computer readable medium (CRM) 642 storing a computer program (CP) 643 comprising computer readable instructions (CRI) 644. CRM 642 may be a non-transitory computer readable medium, such as, magnetic media (e.g., a hard disk), optical media, memory devices (e.g., random access memory, flash memory), and the like. In some embodiments, the CRI 644 of computer program 643 is configured such that when executed by PC 602, the CRI causes apparatus 600 to perform steps described herein (e.g., steps described herein with reference to the flow charts). In other embodiments, apparatus 600 may be configured to perform steps described herein without the need for code. That is, for example, PC 602 may consist merely of one or more ASICs. Hence, the features of the embodiments described herein may be implemented in hardware and/or software.

### Appendix

Appendix begins here.

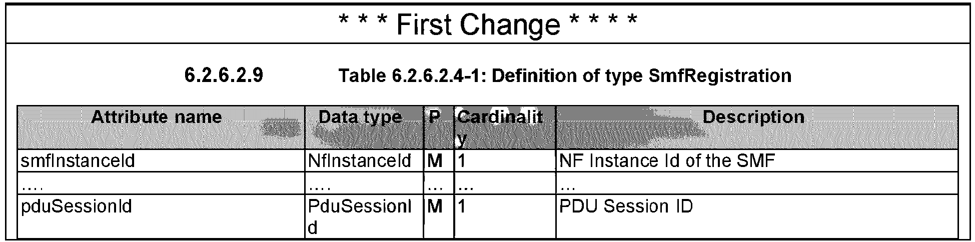

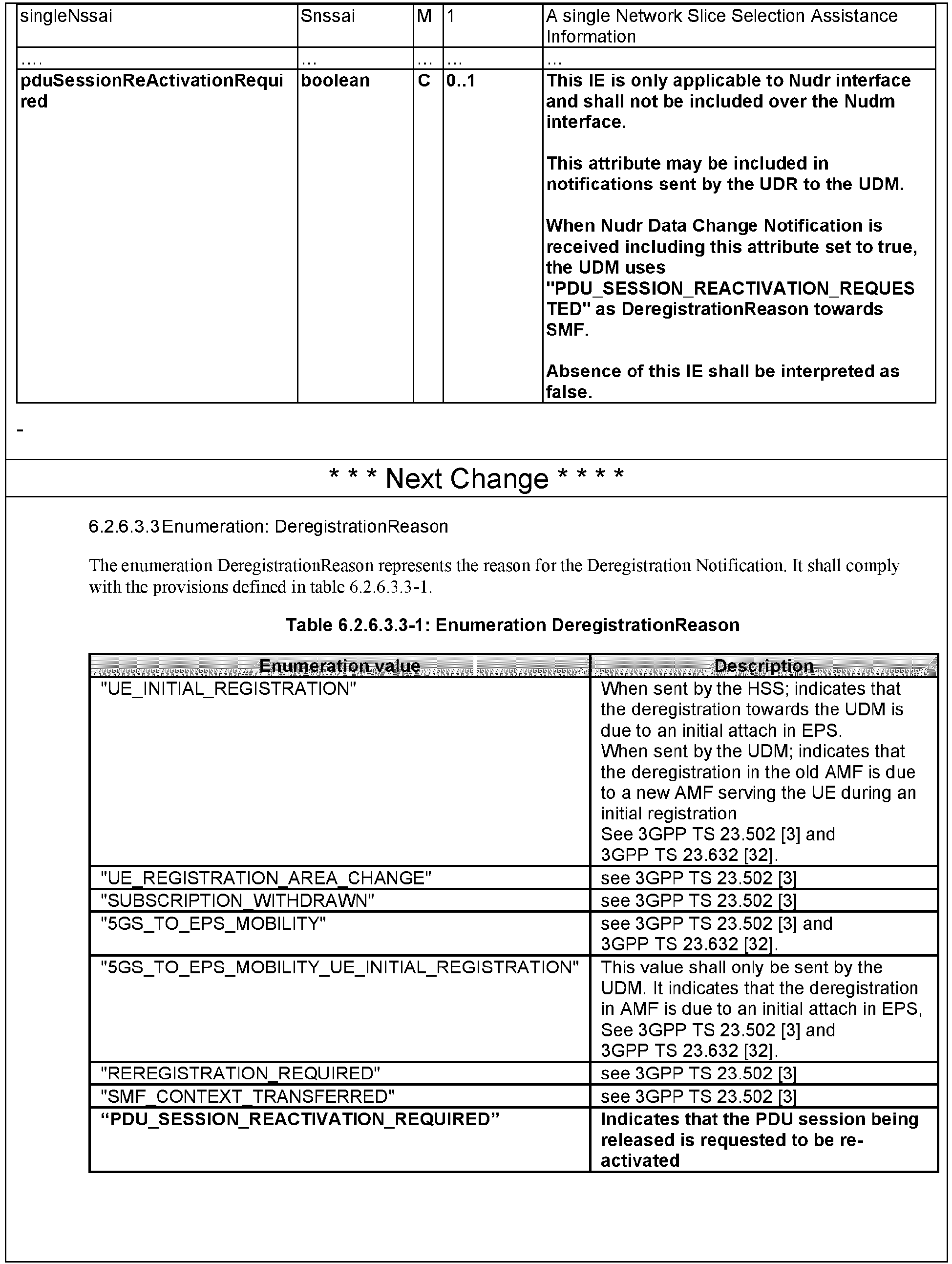

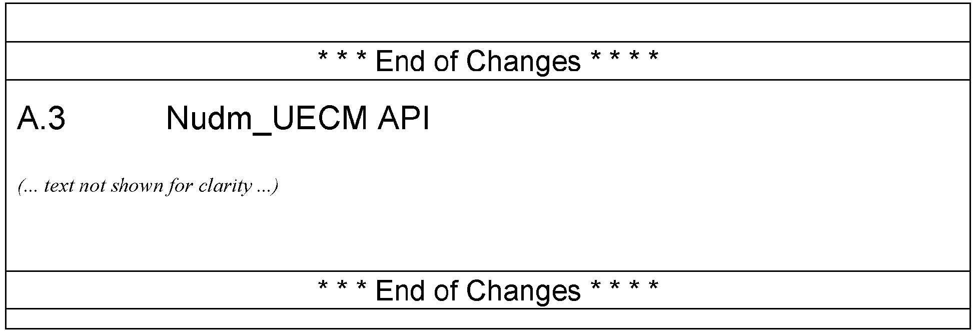

Appendix ends here.

## Claims

1. A method (300) performed by a unified data management, UDM (104), the method comprising:
obtaining (s302) a command for triggering deregistration of a network session associated with a session management function, SMF, and a user equipment, UE, wherein the command is transmitted (s220) by a unified data repository, UDR, and the command includes a uniform resource identifier, URI, pointing to the network session and indicates that reactivation of the network session is required; and
after obtaining the command, transmitting (s230, s304) towards the SMF a deregistration notification request for triggering the SMF to perform the deregistration of the network session, wherein
the deregistration notification request indicates that the network session being deregistered is requested to be reactivated.

2. The method of claim 1, wherein the command also comprises a SMF identifier identifying the SMF or the method comprises retrieving the SMF identifier from the UDR.

3. The method of claim 1, wherein the message is a Nudr_DR_Notify Request.

4. The method of any one of claim 1-3, wherein
the transmission of the message by the UDR was triggered by changing a value of a flag included in a resource related to registration of the SMF for the network session, and
the value of the flag indicates whether reactivation of the network session is required.

5. The method of any one of claim 1-4, comprising:
as a result of receiving the message, transmitting towards the UDR a query request for requesting a network session ID identifying the network session and an SMF ID identifying the SMF; and
receiving the network session ID and the SMF ID.

6. The method of any one of claim 1-5, comprising:
storing a SUPI allocated to the UE, a network session identifier identifying the network session, and a SMF identifier identifying the SMF; and
triggering the UDM to release one or more resources related to the network session.

7. The method of any one of claim 1-6, wherein
the deregistration notification request indicates a reason for deregistering the network session.

8. The method of any one of claim 1-7, wherein the deregistration notification request comprises a SUPI allocated to the UE, a network session identifier identifying the network session, and a SMF identifier identifying the SMF.

9. The method of any one of claim 1-8, wherein the deregistration notification request is a Nudm_UECM_DeregistrationNotification Request.

10. A method (400) performed by a unified data repository, UDR (106), the method comprising:
obtaining (s402) a first command for changing a value of a flag included in a resource, wherein the resource is related to registration of a session management function, SMF, for a network session;
based on the first command, changing (s404) the value of the flag; and
as a result of changing the value of the flag, transmitting (s406) towards a unified data management, UDM, a message including a second command for triggering deregistration of the network session, wherein each of the first and second commands indicates whether reactivation of the network session is required, and the second command includes a uniform resource identifier, URI, pointing to the network session.

11. The method of claim 10, wherein the resource comprises a SUPI, a SMF identifier, ID, identifying the SMF, a network session ID identifying the network session, a single network slice selection assistance information, SNSSAI, and a bit indicating whether reactivation of the network session is required.

12. The method of any one of claim 10 or 11, wherein
the second command comprises a resource ID pointing to the network session, and
the method comprises:
receiving a query request for requesting an SMF ID identifying the SMF and a network session ID identifying the network session and; and
transmitting towards the UDM the SMF ID and the network session ID.

13. A computer program (600) comprising instructions (644) which when executed by a processing unit (602) of a unified data management, UDM (104), cause the UDM (104) to perform the method of any one of claim 1-9.

14. A unified data management, UDM (104), the UDM being configured to:
obtain (s302) a command for triggering deregistration of a network session associated with a session management function, SMF, and a user equipment, UE, wherein the command is transmitted (s220) by a unified data repository, UDR, and the command includes a uniform resource identifier, URI, pointing to the network session and indicates that reactivation of the network session is required; and
after obtaining the command, transmit (s230, s304) towards the SMF a deregistration notification request for triggering the SMF to perform the deregistration of the network session, wherein
the deregistration notification request indicates that the network session being deregistered is requested to be reactivated.

15. The UDM of claim 14, wherein the UDM is configured to perform the method of any one of claim 2-9.

16. A unified data repository, UDR (106), the UDR being configured to:
obtain (s402) a first command for changing a value of a flag included in a resource, wherein the resource is related to registration of a session management function, SMF, for a network session;
based on the first command, change (s404) the value of the flag; and
as a result of changing the value of the flag, transmit (s406) towards a unified data management, UDM, a message including a second command for triggering deregistration of the network session, wherein each of the first and second commands indicates whether reactivation of the network session is required, and the second command includes a uniform resource identifier, URI, pointing to the network session.

17. The UDR of claim 16, wherein the UDR is configured to perform the method of any one of claim 11-12.

## Patentansprüche

1. Verfahren (300), durchgeführt durch eine vereinheitlichte Datenverwaltung, UDM (104), wobei das Verfahren Folgendes umfasst:
Erhalten (s302) eines Befehls zum Veranlassen der Ausbuchung einer Netzwerksitzung, die mit einer Sitzungsverwaltungsfunktion, SMF, und einer Benutzerausrüstung, UE, verknüpft ist, wobei der Befehl durch ein vereinheitlichtes Datenrepository, UDR, übertragen (s220) wird und der Befehl einen einheitlichen Ressourcenbezeichner, URI, einschließt, der auf die Netzwerksitzung verweist und angibt, dass die Reaktivierung der Netzwerksitzung erforderlich ist; und
nach Erhalten des Befehls, (s230, s304) einer Ausbuchungsbenachrichtigungsanforderung zum Veranlassen der SMF, die Ausbuchung der Netzwerksitzung durchzuführen, zur SMF, wobei
die Ausbuchungsbenachrichtigungsanforderung angibt, dass angefordert wird, die Netzwerksitzung, die ausgebucht wird, zu reaktivieren.

2. Verfahren nach Anspruch 1, wobei der Befehl außerdem eine SMF-Kennung, welche die SMF identifiziert, umfasst oder das Verfahren das Abrufen der SMF-Kennung aus dem UDR umfasst.

3. Verfahren nach Anspruch 1, wobei die Nachricht eine Nudr_DR_Notify-Anforderung ist.

4. Verfahren nach einem der Ansprüche 1-3, wobei
die Übertragung der Nachricht durch das UDR durch Ändern eines Werts eines Flags veranlasst wurde, das in einer Ressource eingeschlossen ist, die mit der Einbuchung der SMF für die Netzwerksitzung zusammenhängt, und
der Wert des Flags angibt, ob eine Reaktivierung der Netzwerksitzung erforderlich ist.

5. Verfahren nach einem der Ansprüche 1-4, umfassend:
als Ergebnis des Empfangens der Nachricht erfolgendes Übertragen einer Abfrageanforderung zum UDR zum Anfordern einer Netzwerksitzungskennung, welche die Netzwerksitzung identifiziert, und einer SMF-Kennung, welche die SMF identifiziert; und
Empfangen der Netzwerksitzungskennung und der SMF-Kennung.

6. Verfahren nach einem der Ansprüche 1-5, umfassend:
Speichern einer SUFI, die der UE zugeteilt ist, einer Netzwerksitzungskennung, welche die Netzwerksitzung identifiziert, und einer SMF-Kennung, welche die SMF identifiziert; und
Veranlassen, dass die UDM eine oder mehrere Ressourcen freigibt, die mit der Netzwerksitzung zusammenhängen.

7. Verfahren nach einem der Ansprüche 1-6, wobei
die Ausbuchungsbenachrichtigungsanforderung einen Grund zum Ausbuchen der Netzwerksitzung angibt.

8. Verfahren nach einem der Ansprüche 1-7, wobei die Ausbuchungsbenachrichtigungsanforderung eine SUPI, die der UE zugeteilt ist, eine Netzwerksitzungskennung, welche die Netzwerksitzung identifiziert, und eine SMF-Kennung, welche die SMF identifiziert, umfasst.

9. Verfahren nach einem der Ansprüche 1-8, wobei die Ausbuchungsbenachrichtigungsanforderung eine Nudm_UECM_DeregistrationNotification-Anforderung ist.

10. Verfahren (400), durchgeführt durch ein vereinheitlichtes Datenrepository, UDR (106), wobei das Verfahren Folgendes umfasst:
Erhalten (s402) eines ersten Befehls zum Ändern eines Werts eines Flags, das in einer Ressource eingeschlossen ist, wobei die Ressource mit der Einbuchung einer Sitzungsverwaltungsfunktion, SMF, für eine Netzwerksitzung zusammenhängt;
auf der Grundlage des ersten Befehls, Ändern (s404) des Werts des Flags; und
als Ergebnis des Änderns des Werts des Flags, Übertragen (s406) einer Nachricht, die einen zweiten Befehl zum Veranlassen der Ausbuchung der Netzwerksitzung einschließt, zu einer vereinheitlichten Datenverwaltung, UDM, wobei jeder des ersten und des zweiten Befehls angibt, ob eine Reaktivierung der Netzwerksitzung erforderlich ist, und der zweite Befehl einen einheitlichen Ressourcenbezeichner, URI, einschließt, der auf die Netzwerksitzung verweist.

11. Verfahren nach Anspruch 10, wobei die Ressource eine SUPI, eine SMF-Kennung, ID, welche die SMF identifiziert, eine Netzwerksitzungskennung, welche die Netzwerksitzung identifiziert, eine Single Network Slice Selection Assistance Information, SNSSAI, auch Information zur Unterstützung der Auswahl einer einzelnen Netzwerk-Slice genannt, und ein Bit, das angibt, ob eine Reaktivierung der Netzwerksitzung erforderlich ist, umfasst.

12. Verfahren nach einem der Ansprüche 10 oder 11, wobei
der zweite Befehl eine Ressourcenkennung umfasst, die auf die Netzwerksitzung verweist, und
das Verfahren Folgendes umfasst:
Empfangen einer Abfrageanforderung zum Anfordern einer SMF-Kennung, welche die SMF identifiziert, und einer Netzwerksitzungskennung, welche die Netzwerksitzung identifiziert; und
Übertragen der SMF-Kennung und der Netzwerksitzungskennung zur UDM.

13. Computerprogramm (600), Anweisungen (644) umfassend, die, wenn sie durch eine Verarbeitungseinheit (602) einer vereinheitlichten Datenverwaltung, UDM (104), ausgeführt werden, bewirken, dass die UDM (104) das Verfahren nach einem der Ansprüche 1-9 durchführt.

14. Vereinheitlichte Datenverwaltung, UDM (104), wobei die UDM dafür konfiguriert ist:
einen Befehl zum Veranlassen der Ausbuchung einer Netzwerksitzung, die mit einer Sitzungsverwaltungsfunktion, SMF, und einer Benutzerausrüstung, UE, verknüpft ist, zu erhalten (s302), wobei der Befehl durch ein vereinheitlichtes Datenrepository, UDR, übertragen wird (s220) und der Befehl einen einheitlichen Ressourcenbezeichner, URI, einschließt, der auf die Netzwerksitzung verweist und angibt, dass die Reaktivierung der Netzwerksitzung erforderlich ist; und
nach Erhalten des Befehls, eine Ausbuchungsbenachrichtigungsanforderung zum Veranlassen der SMF, die Ausbuchung der Netzwerksitzung durchzuführen, zur SMF zu übertragen (s230, s304), wobei
die Ausbuchungsbenachrichtigungsanforderung angibt, dass angefordert wird, die Netzwerksitzung, die ausgebucht wird, zu reaktivieren.

15. UDM nach Anspruch 14, wobei die UDM dafür konfiguriert ist, das Verfahren nach einem der Ansprüche 2-9 durchzuführen.

16. Vereinheitlichtes Datenrepository, UDR (106), wobei das UDR dafür konfiguriert ist:
einen ersten Befehl zum Ändern eines Werts eines Flags, das in einer Ressource eingeschlossen ist, zu Erhalten (s402), wobei die Ressource mit der Einbuchung einer Sitzungsverwaltungsfunktion, SMF, für eine Netzwerksitzung zusammenhängt;
auf der Grundlage des ersten Befehls den Wert des Flags zu ändern (s404); und
als Ergebnis des Änderns des Werts des Flags eine Nachricht, die einen zweiten Befehl zum Veranlassen der Ausbuchung der Netzwerksitzung einschließt, zu einer vereinheitlichten Datenverwaltung, UDM, zu übertragen (s406), wobei jeder des ersten und des zweiten Befehls angibt, ob eine Reaktivierung der Netzwerksitzung erforderlich ist, und der zweite Befehl einen einheitlichen Ressourcenbezeichner, URI, einschließt, der auf die Netzwerksitzung verweist.

17. UDR nach Anspruch 16, wobei das UDR dafür konfiguriert ist, das Verfahren nach einem der Ansprüche 11-12 durchzuführen.

## Revendications

1. Procédé (300) mis en œuvre par un système unifié de gestion de données, UDM (104), le procédé comprenant :
l'obtention (s302) d'une commande de déclenchement du désenregistrement d'une session de réseau associée à une fonction de gestion de session, SMF, et à un équipement d'utilisateur, UE, dans lequel la commande est transmise (s220) par un référentiel de données unifié, UDR, et la commande inclut un identifiant de ressource uniforme, URI, pointant vers la session de réseau et indique que la réactivation de la session de réseau est requise ; et
après l'obtention de la commande, la transmission (s230, s304) à la SMF d'une demande de notification de désenregistrement pour déclencher la réalisation du désenregistrement de la session de réseau par la SMF, dans lequel
la demande de notification de désenregistrement indique que la session de réseau en cours de désenregistrement doit être réactivée.

2. Procédé selon la revendication 1, dans lequel la commande comprend également un identifiant SMF identifiant la SMF ou le procédé comprend la récupération de l'identifiant SMF à partir de l'UDR.

3. Procédé selon la revendication 1, dans lequel le message est une demande de Nudr_DR_Notify.

4. Procédé selon l'une quelconque des revendications 1-3, dans lequel
la transmission du message par l'UDR a été déclenchée par la modification d'une valeur d'un indicateur inclus dans une ressource liée à l'enregistrement de la SMF pour la session de réseau, et
la valeur de l'indicateur indique si la réactivation de la session de réseau est requise.

5. Procédé selon l'une quelconque des revendications 1-4, comprenant :
à la suite de la réception du message, la transmission à l'UDR d'une demande de requête pour obtenir un ID de session de réseau identifiant la session de réseau et un ID de SMF identifiant la SMF ; et
la réception de l'ID de session de réseau et de l'ID de SMF.

6. Procédé selon l'une quelconque des revendications 1-5, comprenant :
le stockage d'un SUFI alloué à l'UE, d'un identifiant de session de réseau identifiant la session de réseau et d'un identifiant de SMF identifiant la SMF ; et
le déclenchement de la libération par l'UDM d'une ou plusieurs ressources liées à la session de réseau.

7. Procédé selon l'une quelconque des revendications 1-6, dans lequel
la demande de notification de désenregistrement indique une raison de désenregistrement de la session de réseau.

8. Procédé selon l'une quelconque des revendications 1-7, dans lequel la demande de notification de désenregistrement comprend un SUPI alloué à l'UE, un identifiant de session de réseau identifiant la session de réseau et un identifiant de SMF identifiant la SMF.

9. Procédé selon l'une quelconque des revendications 1-8, dans lequel la demande de notification de désenregistrement est une demande Nudm_UECM_DeregistrationNotification.

10. Procédé (400) mis en œuvre par un référentiel de données unifié, UDR (106), le procédé comprenant :
l'obtention (s402) d'une première commande pour modifier une valeur d'un indicateur inclus dans une ressource, dans lequel la ressource est liée à l'enregistrement d'une fonction de gestion de session, SMF, pour une session de réseau ;
sur la base de la première commande, la modification (s404) de la valeur de l'indicateur ; et
à la suite de la modification de la valeur de l'indicateur, la transmission (s406) à un système unifié de gestion de données, UDM, d'un message incluant une seconde commande pour déclencher le désenregistrement de la session de réseau, dans lequel chacune des première et seconde commandes indique si la réactivation de la session de réseau est requise, et la seconde commande inclut un identifiant de ressource uniforme, URI, pointant vers la session de réseau.

11. Procédé selon la revendication 10, dans lequel la ressource comprend un SUPI, un identifiant, ID, de SMF, identifiant la SMF, un ID de session de réseau identifiant la session de réseau, une information d'assistance à la sélection d'une tranche de réseau unique, SNSSAI, et un bit indiquant si la réactivation de la session de réseau est requise.

12. Procédé selon l'une quelconque des revendications 10 ou 11, dans lequel
la seconde commande comprend un ID de ressource pointant vers la session de réseau, et
le procédé comprend :
la réception d'une demande de requête pour obtenir un ID de SMF identifiant la SMF et un ID de session de réseau identifiant la session de réseau ; et
la transmission à l'UDM de l'ID de SMF et de l'ID de session de réseau.

13. Programme informatique (600) comprenant des instructions (644) qui, lorsqu'elles sont exécutées par une unité de traitement (602) d'un système unifié de gestion de données, UDM (104), amènent l'UDM (104) à exécuter le procédé selon l'une quelconque des revendications 1-9.

14. Système unifié de gestion de données, UDM (104), l'UDM étant configuré pour :
obtenir (s302) une commande de déclenchement du désenregistrement d'une session de réseau associée à une fonction de gestion de session, SMF, et à un équipement d'utilisateur, UE, dans lequel la commande est transmise (s220) par un référentiel de données unifié, UDR, et la commande inclut un identifiant de ressource uniforme, URI, pointant vers la session de réseau et indique que la réactivation de la session de réseau est requise ; et
après l'obtention de la commande, transmettre (s230, s304) à la SMF une demande de notification de désenregistrement pour déclencher la réalisation du désenregistrement de la session de réseau par la SMF, dans lequel
la demande de notification de désenregistrement indique que la session de réseau en cours de désenregistrement doit être réactivée.

15. UDM selon la revendication 14, dans lequel l'UDM est configuré pour exécuter le procédé selon l'une quelconque des revendications 2-9.

16. Référentiel de données unifié, UDR (106), l'UDR étant configuré pour :
obtenir (s402) une première commande pour modifier une valeur d'un indicateur inclus dans une ressource, dans lequel la ressource est liée à l'enregistrement d'une fonction de gestion de session, SMF, pour une session de réseau ;
sur la base de la première commande, modifier (s404) la valeur de l'indicateur ; et
à la suite de la modification de la valeur de l'indicateur, transmettre (s406) à un système unifié de gestion de données, UDM, un message incluant une seconde commande pour déclencher le désenregistrement de la session de réseau, dans lequel chacune des première et seconde commandes indique si la réactivation de la session de réseau est requise, et la seconde commande inclut un identifiant de ressource uniforme, URI, pointant vers la session de réseau.

17. UDR selon la revendication 16, dans lequel l'UDR est configuré pour exécuter le procédé selon l'une quelconque des revendications 11-12.
